# EUROPEAN PATENT APPLICATION

(11) **EP 4 556 285 A1**
(43) Date of publication of application: **21.05.2025**
(21) Application number: 24213197.7
(22) Date of filing: 15.11.2024
(51) Int. Cl.: B60K 35/22, B60H 1/00, B60H 1/32, B60K 35/28, B60K 35/60, B60K 35/65, B60P 3/20, F25D 29/00

(54) **REMOTE STATUS DISPLAY SYSTEM FOR A TRANSPORT REFRIGERATION UNIT**

(30) Priority: 15.11.2023 US 202363599341 P
(71) Applicant: Carrier Corporation, Palm Beach Gardens, FL 33418 (US)
(72) Inventor: KNIGHT,Alan, Syracuse, NY 13057 (US); FRAGNITO, Mark, Athens, GA 30601 (US); YEUNG YUE, Ching, Syracuse, NY 13057 (US)
(74) Representative: Dehns

(57) **Abstract**

A remote status display unit (55) for a transportation refrigeration unit (104). The transportation refrigeration unit (104) includes a telematics device (106). The remote status display device (55) comprises: a housing and a display portion (502, 504, 506, 508, 510, 512, 514) coupled to the housing. The display portion (502, 504, 506, 508, 510, 512, 514) includes a screen configured to display a parameter associated with the transportation refrigeration unit (104). The display portion (502, 504, 506, 508, 510, 512, 514) is coupled to the telematics device (106) to display the parameter.

## Description

### BACKGROUND

A mobile refrigeration system, also known as a Transport Refrigeration Unit (TRU), is employed in cargo carrying vehicles, such as trucks tractor trailers, and intermodal containers, to regulate the temperature of a cargo space to facilitate the transport of perishable goods, such as food and pharmaceuticals. The transportation refrigeration unit described herein is disposed on a structure defining a cargo space such as a trailer, an intermodal container, or a cargo box of a truck. When disposed on a trailer, the trailer is connected to a tractor, sometimes referred to as a semi-truck or prime mover. The tractor is responsible for the mobility of the trailer. An intermodal container may be disposed on a trailer, a rail car or may be moved by ship.

The TRU has a power source independent of the tractor. Exemplary TRU power sources include onboard generators, fuel cells and energy storage devices such as batteries. The TRU is equipped with a TRU controller that controls the operation of the TRU. Additionally, the TRU may be equipped with a remote status display, such as a light bar, that indicates an operational status of the TRU, typically to the driver inside the truck or tractor. Currently available light bars convey limited information. Hence there is a need in the art for a remote status display that can communicate additional information to the driver.

### SUMMARY

This summary is provided to introduce a selection of concepts, in a simplified format, that are further described in the detailed description of the invention. This summary is neither intended to identify key or essential inventive concepts of the invention nor is it intended for determining the scope of the invention which is set out in the appended claims.

According to a first aspect of the invention there is provided a remote status display unit for a transportation refrigeration unit. The transportation refrigeration unit includes a telematics device. The remote status display device comprises: a housing and a display portion coupled to the housing. The display portion includes a screen configured to display a parameter associated with the transportation refrigeration unit. The display portion is coupled to the telematics device to display the parameter.

Optionally, the transportation refrigeration unit is attached to a structure defining a cargo space and the housing is attachable to the structure.

Optionally, the display portion is coupled to the telematics device through a wired connection.

Optionally, the display portion is coupled to the telematics device through a wireless connection.

Optionally, the telematics device is coupled to a controller associated with the transportation unit.

Optionally, the parameter comprises fuel level, battery status, cargo space temperature, transportation refrigeration unit mode, tire pressure, door status, tractor/trailer matching status, or a combination thereof.

According to a second aspect of the invention there is provided a transportation refrigeration unit comprising a telematics unit operably coupled to a controller for the transportation refrigeration unit and operably coupled to a remote status display unit wherein the remote status display unit has a screen configured to display a parameter associated with the transportation refrigeration unit.

Optionally, the controller is in communication with a plurality of sensors associated with the transportation refrigeration unit.

Optionally, the telematics unit is in communication with a plurality of sensors associated with the transportation refrigeration unit, the cargo space or the trailer.

Optionally, the plurality of sensors comprises a temperature sensor, a fuel level sensor, a door status sensor, a battery status sensor, a tractor/trailer matching sensor, trailer tire pressure sensor, or a combination thereof.

Optionally, the telematics unit is operably connected to the display unit by a wireless connection.

Optionally, the telematics unit is operably connected to the display unit by a wired connection.

Optionally, the telematics unit is operably connected to the controller by a wireless connection.

Optionally, the telematics unit is operably connected to the controller by a wired connection.

Optionally, the transportation refrigeration unit attached to a structure defining a cargo space and the display unit has a housing is attachable to the structure.

To further clarify the advantages and features of the invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained by way of example only with additional specificity and detail in the accompanying drawings.

### BRIEF DESCRIPTION OF THE DRAWINGS

Certain exemplary embodiments and advantages of the invention will become better understood when the following detailed description is read with reference to the accompanying drawings in which like characters represent like parts throughout the drawings, wherein:
Figure 1 illustrates a vehicle having a transport refrigeration unit (TRU), and a telematics system for relaying parameters associated with the TRU;
Figure 2 illustrates a remote status display unit attached to a tractor trailer; and
Figure 3 illustrates a remote status display unit.

Further, skilled artisans will appreciate that elements in the drawings are illustrated for simplicity and may not have necessarily been drawn to scale. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION OF FIGURES

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments of the invention will be described below in detail with reference to the accompanying drawings.

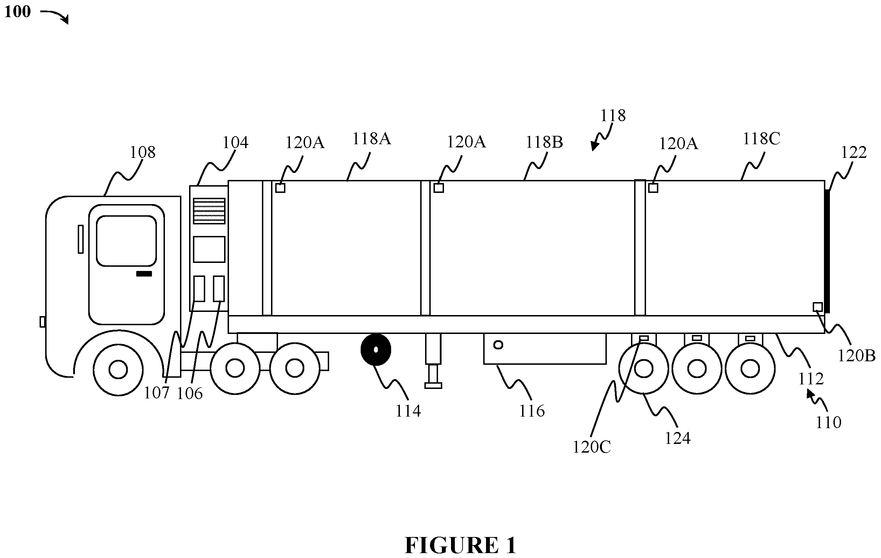

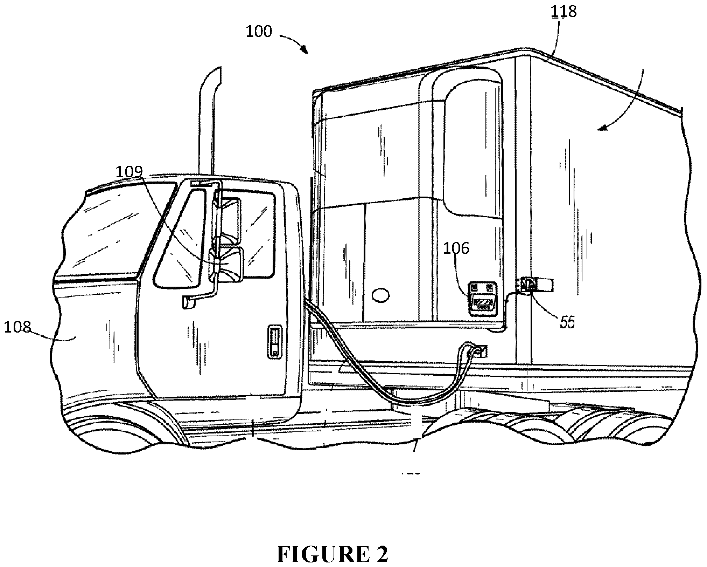

Figure 1 illustrates a tractor trailer 100 having a transport refrigeration unit (TRU) 104 disposed on a cargo section 118. The cargo section 118, the chassis 112 and the associated axles together form trailer 110. The TRU includes a telematics system 106 relaying parameters associated with the TRU 104, the cargo space inside cargo section 118, the trailer, or a combination thereof to a remote status display unit 55 (shown in Figure 2) which can be viewed by the driver from the cab of the tractor trailer. The remote status display unit provides a driver/operator with a multitude of information regarding the operation of the TRU 104, cargo section 118 and/or trailer 110 on a real-time basis which was not previously available.

The telematics system may also be connected to a cloud server, such that the telematics system can relay the respective parameters to another vehicle which also has a telematics system and/or the cloud server. In one example, the telematics system 106 of the tractor trailer 100 collates, analyzes, and relays the parameters and an analysis thereof from the tractor trailer 100 to the driver via the remote status display 55 and to the cloud server.

While Figure 1 shows a tractor trailer 100, the TRU may instead be disposed adjacent to a cargo box of a truck or the cargo area of a van or light commercial vehicle.

A fuel tank 114 may be mounted to trailer 110 and provide fuel to a power generator, such as an internal combustion engine or a fuel cell of the TRU 104. A battery or other energy storage device 116 may be mounted to the trailer and provide energy to the TRU. The battery may be in addition to, or in place of a power generator. The cargo section 118 can be divided into multiple compartments 118A, 118B, and 118C, such that temperatures in each compartment may be maintained at different levels. Such an arrangement allows for carrying perishable items as per their rated temperature for storage. Each compartment may have one or more sensors such a temperature sensors 120A, humidity sensors and the like. The sensors may be connected to the TRU controller, the telematics system, or both. In addition, a door sensor 120B may sense a status of a door 122 of the cargo section 118 indicating whether the door 122 is open or closed. A tire pressure sensor 120C that may sense a pressure of tires 124 of the trailer 110. These sensors, when present, may be connected to the telematics system, the TRU controller or both.

A battery status sensor (not shown) may provide information pertinent to the battery 116, such as the state of the main battery charge, battery voltage, battery health, and current draw. The battery sensor may be connected to the TRU controller, the telematics system or both. The fuel tank 114 may have a fuel level sensor (not shown) connected to the TRU controller, the telematics system or both.

The TRU 104 may be configured to maintain a desired temperature in the cargo section 118. Operation of the TRU may be understood by a person of skill in the art and will not be explained here. The telematics system 106 is communicably coupled with the TRU 104. In one example, the telematics system 106 is integrated into the TRU 104. In another embodiment, the telematics system 106 may be located remotely and connected to the TRU 104.

Figure 2 illustrates the remote status display unit 55 attached to the cargo section 118. The position of the remote status display unit is chosen to facilitate viewing of the display portion by the driver when located in the cab of tractor 108 via the side mirror 109. In another embodiment, the remote status display unit 55 may installed at a position, such that the remote status display unit 55 may be viewed directly when the tractor 108 is parked to allow the monitoring of the parameters during period inspection.

The TRU 104 may also include a controller 107, such as a TRU controller which is adapted to control the operations of the TRU. The controller typically includes a display unit located on the TRU. The controller display unit is separate from the remote status display unit 55 shown in Figure 2. The controller display unit cannot be seen by the driver when the driver is in the cab of the tractor. The controller 107 may be in communication with the telematics system 106 and information from the controller may be relayed to the remote status display by the telematics system.

The remote status display unit 55 comprises a housing and a display portion coupled to the housing. The housing may be mounted to the cargo section 118 as shown in Figure 2 in a position to facilitate viewing from the cab of the tractor. It is also contemplated that the housing may be removably mounted to the cargo section such that the remote status display is portable. The remote status display unit 55 may display a set of parameters gathered by the telematics system 106. As per this disclosure, the display unit 55 receives the data from the telematics system 106 and not from the controller 107 like in the conventional systems. As a result, the display unit 55 is able to present a plethora of information to the user that conventional TRUs fail to provide.

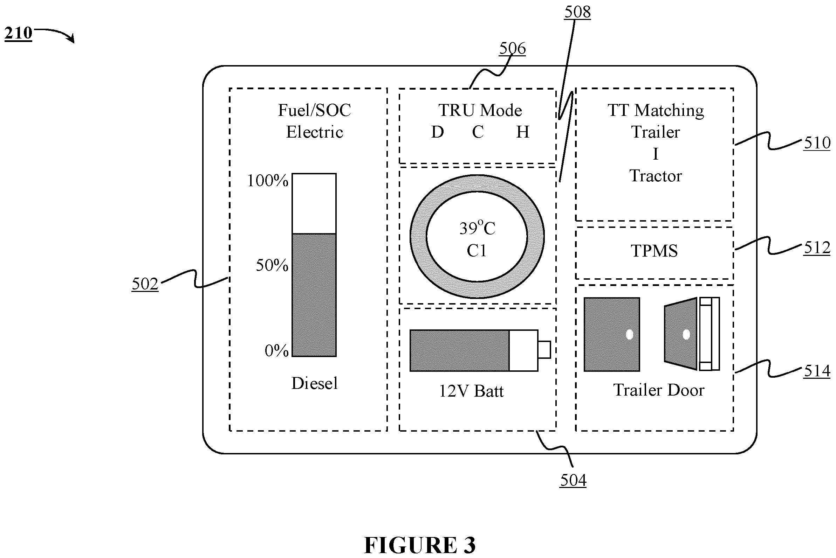

Figure 3 illustrates the remote status display unit 55 operated by the telematics system 106. The display unit 55 may be any suitable display type and may provide the user with a plethora of parameters. The display unit 55 may have a first section 502 that may present parameters pertaining to the amount of fuel/electric charge available for the TRU 104. In addition, the display unit 55 may include a second section 504 that may present a parameter pertaining to a voltage level of battery of the TRU 104. Furthermore, the display unit 55 may have a third section 506 that may indicate a mode of operation of the TRU in which the symbols 'D' means 'Defrost, 'C' means Cool, and 'H' means heat.

The display unit 55 may include a fourth section 508 which is a multi-temperature section that may indicate the temperature of the compartment in which the number indicates the temperature in degrees Celsius and the symbol `C1' indicates the selected compartment 118A, such that symbols C2 and C3 are indicative of the compartments 118B and 118C respectively. The fourth section 508 may also include a ring that lights up in amber color when the temperature selected compartment exceeds a preset value. The preset value, in one example, maybe the rated temperature of the perishable items kept in the compartment. The display unit 55 may also include a fifth section 510 indicative of TT matching of 'trailer' or 'tractor'. Further, the display unit 55 may include a sixth section 512 which indicates a symbol 'TMPS' indicative of low tire pressure of any of the wheels. Finally, the display unit 55 may include a seventh section 514 that indicates the status of the door 122 as open or closed. Although not shown, the display unit 55 may include an interface that may allow the user to toggle the sections 502-514 or change the brightness of the display unit 55. According to this disclosure, the display unit 55 provides a plethora of parameters to the user unlike current solutions which only provide the status of the TRU 104 in the form of a light bar. The display unit 55 may also include a light sensor 516 mounted on a corner to the housing and is adapted to sense ambient light to adjust the brightness of the aforementioned sections 502-514.

While specific language has been used to describe the invention, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A remote status display unit (55) for a transportation refrigeration unit (104) including a telematics device (106), the remote status display unit comprising:
a housing; and
a display portion (502, 504, 506, 508, 510, 512, 514) coupled to the housing and including a screen configured to display a parameter associated with the transportation refrigeration unit wherein the display portion is operably coupled to the telematics device to display the parameter.

2. The remote status display unit (55) of claim 1, wherein the transportation refrigeration unit (104) is attached to a structure defining a cargo space and the housing is attachable to the structure.

3. The remote status display unit (55) of claim 1 or 2, wherein the display portion (502, 504, 506, 508, 510, 512, 514) is operably coupled to the telematics device (106) through a wired connection.

4. The remote status display unit (55) of claim 1 or 2, wherein the display portion (502, 504, 506, 508, 510, 512, 514) is operably coupled to the telematics device (106) through a wireless connection.

5. The remote status display unit (55) of any of claims 1 to 4, wherein the telematics device (106) is operably coupled to a controller (107) associated with the transportation unit (104).

6. The remote status display unit (55) of any preceding claim, wherein the parameter comprises fuel level, battery status, cargo space temperature, transportation refrigeration unit mode, door status, tractor/trailer matching status or a combination thereof.

7. A transportation refrigeration unit (104) comprising a telematics unit (106) operably coupled to a controller (107) for the transportation refrigeration unit and operably coupled to a remote status display unit (55) wherein the remote status display unit has a screen configured to display a parameter associated with the transportation refrigeration unit.

8. The transportation refrigeration unit (104) of claim 7, wherein the controller (107) is in communication with a plurality of sensors (120A-C) associated with the transportation refrigeration unit.

9. The transportation refrigeration unit (104) of claim 7, wherein the telematics unit (106) is in communication with a plurality of sensors (120A-C) associated with the transportation refrigeration unit.

10. The transportation refrigeration unit (104) of claim 8 or 9, wherein the plurality of sensors (120A-C) comprises a temperature sensor (120A), a fuel level sensor, a door status sensor (120B), a battery status sensor, a tractor/trailer matching sensor, or a combination thereof.

11. The transportation refrigeration unit (104) of any of claims 7 to 10, wherein the telematics unit (106) is operably connected to the remote status display unit (55) by a wireless connection.

12. The transportation refrigeration unit (104) of any of claims 7 to 10, wherein the telematics unit (106) is operably connected to the remote status display unit (55) by a wired connection.

13. The transportation refrigeration unit (104) of any of claims 7 to 12, wherein the telematics unit (106) is operably connected to the controller (107) by a wireless connection.

14. The transportation refrigeration unit (104) of any of claims 7 to 12, wherein the telematics unit (106) is operably connected to the controller (107) by a wired connection.

15. The transportation refrigeration unit (104) of any of claims 7 to 14, wherein the transportation refrigeration unit attached to a structure defining a cargo space and the remote status display unit (55) has a housing is attachable to the structure.
